# FASCICULE DE BREVET EUROPEEN

(11) **EP 1 990 891 B1**
(45) Date de publication et mention de la délivrance du brevet: **23.03.2016**
(21) Numéro de dépôt: 08354026.0
(22) Date de dépôt: 06.05.2008
(51) Int. Cl.: H02J 7/34, H02J 7/14

(54) **Procédé de charge d'un élément de stockage d'un système autonome**
Aufladeverfahren eines Speicherelements eines autonomen Systems
Method for charging a storage element of a standalone system

(30) Priorité: 11.05.2007 FR 0703370
(43) Date de publication de la demande: 12.11.2008
(73) Titulaire: Commissariat à l'Énergie Atomique et aux Énergies Alternatives, 75015 Paris (FR)
(72) Inventeur: Labrunie, Antoine, 75005 Paris (FR); Perichon, Pierre, 38500 Voiron (FR)
(74) Mandataire: Hecké, Gérard

(56) Documents cités:
- GB-A- 2 417 378
- US-A1- 2005 040 786
- US-A1- 2006 261 830
- US-A1- 2006 276 938
- US-B1- 6 266 576

## Description

### Domaine technique de l'invention

L'invention est relative à un procédé de charge, à partir d'un générateur, d'un élément de stockage d'un système autonome comportant des composants électroniques, avec une limitation, en fonction de la température, de la puissance fournie à l'élément de stockage à une puissance consigne de charge.

### État de la technique

Un système autonome doit à la fois présenter une grande qualité de service (fourniture d'énergie en permanence) et une grande fiabilité. La qualité de service impose de charger au maximum les batteries dès que l'énergie est disponible, afin d'assurer une autonomie maximale en cas de longue période de faible ressource.

Concernant la fiabilité, il est préférable de limiter la puissance de charge lorsque la température ambiante est élevée, de façon à limiter la température interne des composants. En effet, les composants actifs ou passifs représentent la principale source de défaillance et la durée de vie des composants est fonction de leur température. Plus la température est élevée et plus la durée de vie des composants (actifs et passifs) est faible. La température des composants dépend de la température de l'environnement du système autonome et de réchauffement dû à la dissipation d'une partie de la puissance de charge. Il est, également, préférable de limiter les variations importantes de température. Ces variations proviennent principalement de pics ou de variations importantes du courant mais aussi des variabilités thermiques cycliques et des chocs thermiques. De plus, une limitation des courants de charge et décharge permet d'éviter une contribution thermique supplémentaire.

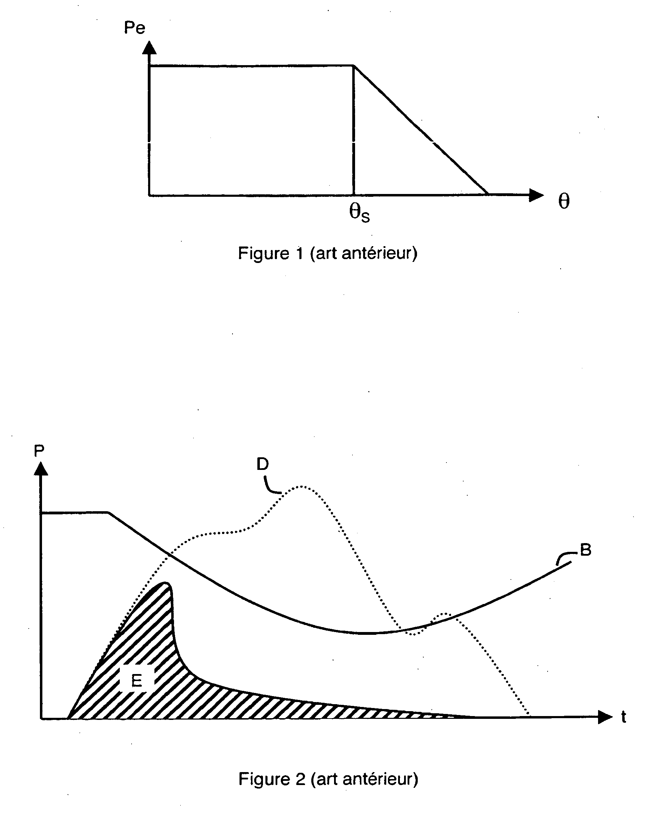

Actuellement, la majorité des systèmes autonomes utilisent l'allégement de régime (« derating » en anglais). Cette technique consiste à limiter, à partir d'une température de seuil θ_{S}, la puissance maximale admise en fonction de la température, comme illustré sur la figure 1. Dans l'exemple représenté, la puissance maximale d'entrée Pe est constante jusqu'à la température de seuil θs, puis décroît linéairement lorsque la température dépasse cette température de seuil. L'évolution classique de la puissance fournie par le générateur (courbe D en pointillé), de la puissance acceptable (courbe B, en trait plein) et de l'énergie accumulée dans la batterie (E, hachurée) pendant une journée est illustrée schématiquement à la figure'2. De cette manière, la limitation de la puissance aux températures élevées évite la destruction immédiate des composants du système et assure un service minimum.

Cependant, la protection thermique réalisée par allégement de régime est limitée. D'une part, celle-ci se focalise sur la température maximale, or en dessous de cette température seuil, la fiabilité des composants fluctue énormément. La fiabilité est représentée schématiquement par la durée entre deux pannes non destructrices (« MTBF, Mean Time Between Failure », en anglais) et est dépendante de la température. Par exemple, une augmentation de 18°C de la température de jonction d'un transistor de puissance divise par deux la durée entre deux pannes non destructrices. D'autre part, l'allègement de régime ne limite pas les chocs thermiques et les variations thermiques cycliques. Ces deux points ont une grande influence sur la fiabilité. Par exemple, la durée entre deux pannes non destructrices est divisée par deux à chaque fois que l'ondulation de la température de jonction augmente de 15°C.

La densité de courant a, également, un effet notable sur la fiabilité du système et, dans l'art antérieur, le courant n'est pas limité tant qu'il n'entraîne pas un échauffement important.

Cependant, dans son ensemble, l'allégement de régime ne permet pas d'améliorer la fiabilité du système. En effet, cette technique, illustrée sur la figure 2, ne permet pas d'éviter les pics de puissance aux bornes de l'élément de stockage et ne limite donc pas les pics de courant de charge. Ce mode de fonctionnement ne permet donc pas de fonctionner à une température aussi stable et basse que possible.

Un autre facteur important à prendre en compte pour améliorer la fiabilité du système est la température de fonctionnement de la batterie.

Les batteries, quelle que soit leur technologie, voient également leur durée de vie diminuer si elles sont utilisées dans de mauvaises conditions thermiques. Le fonctionnement en température basse induit un ralentissement de la cinétique des réactions chimiques et électrochimiques aux interfaces électrode/électrolyte. Les courants de charge et de décharge doivent être limités car, à froid, le transport de matière des ions dans l'électrolyte, et leur diffusion dans les sites actifs des électrodes sont cinétiquement ralentis. La réduction des courants en charge et en décharge permet aux réactions électrochimiques de se dérouler jusqu'au coeur du matériau actif. Dans le cas contraire, les réactions se déroulent principalement à la surface des pores, avec leur obstruction par les produits de réaction et la réduction de la progression des ions dans l'électrolyte. Les phénomènes résultants conduisent à une perte de capacité irréversible de l'élément (obstruction de sites actifs pour une batterie lithium-ion par exemple) et/ou une diminution de la durée de vie de la batterie (consommation de l'électrolyte pour une batterie Nickel-Métal Hydrure par exemple).

Le fonctionnement en température élevée, avec un état de charge élevé accélère la cinétique de formation des réactions secondaires ou irréversibles, qui ont lieu principalement au milieu ou en fin de charge (électrolyse de l'eau pour une batterie Ni-MH, modification structurelle du matériau actif positive de la batterie lithium-ion par exemple). Pour ces raisons, les tensions de fin de charge sont fréquemment régulées en fonction de la température. Malqré cela, des phénomènes de dégradation chimiques inévitables mais faibles à température ambiante sont favorisés à température élevée.

La majorité des régulateurs de charge actuels se contentent de déconnecter la batterie de sa source et/ou de sa charge lorsque les paramètres mesurés sont en dehors de spécifications. De plus de nombreux régulateurs relèvent ou abaissent les seuils de régulation de tension en fonction de la température. Ces systèmes permettent ainsi d'éviter une destruction immédiate de la batterie en limitant la plage de température en fonctionnement et l'exploration en tension. Cependant, la protection réalisée par le régulateur est limitée car d'une part elle se limite à une déconnexion à un maximum de température, or même en deçà de cette limite, la durée de vie de la batterie varie énormément. Un tel régulateur est montré dans le document US 2006/276 938 A1.

### Objet de l'invention

L'objet de l'invention consiste à pallier les inconvénients précités et en particulier à améliorer la fiabilité du système de stockage sans réduire la qualité de service.

Selon l'invention, ce but est atteint par le fait que le procédé comporte un procédé de charge avec les caractéristiques techniques de la revendication 1.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 illustrent schématiquement les variations de la puissance maximale d'entrée en fonction de la température (fig. 1) et l'évolution correspondante, pendant une journée classique, de la puissance fournie par le générateur (courbe D en pointillé), de la puissance maximale acceptable (courbe B, en trait plein) et de l'énergie accumulée dans la batterie (E, hachurée) pendant une journée, par un procédé d'allègement de régime selon l'art antérieur.
La figure 3 représente de façon schématique un système autonome dans lequel le procédé selon l'invention peut être mis en oeuvre.
La figure 4 représente la relation entre la température (θ) et la puissance de charge (P) pour diverses valeurs d'un critère de fiabilité constitué par la durée entre deux pannes non destructrices.
La figure 5 représente de façon schématique l'évolution des différentes puissances représentatives du système autonome dont l'élément de stockage d'énergie est chargé, pendant une journée, par un procédé de charge selon l'invention.

### Description d'un mode préférentiel de l'invention

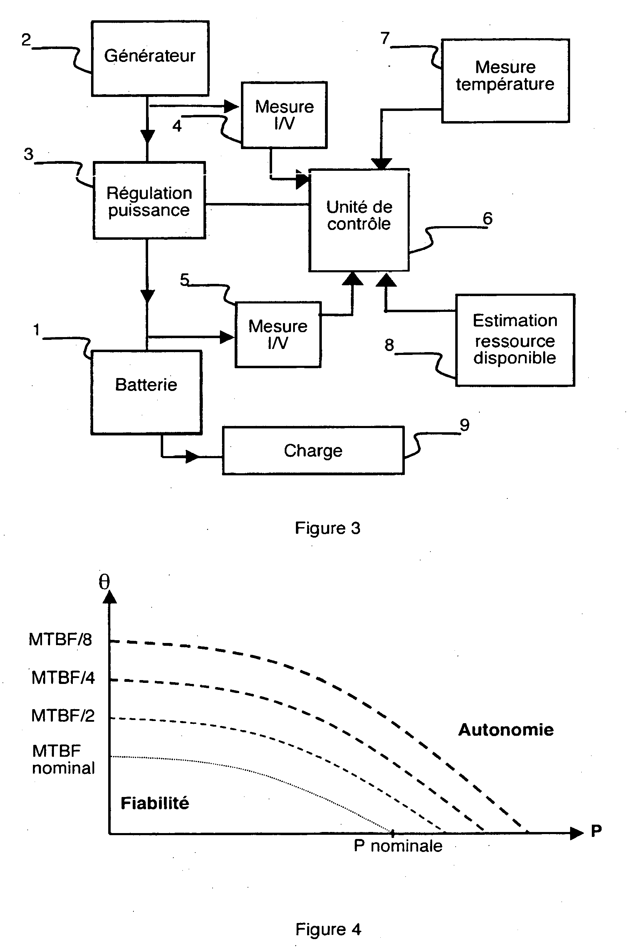

Comme illustré sur la figure 3, le système autonome comporte au moins une batterie 1 comme élément de stockage d'énergie, un générateur 2 d'énergie et un régulateur de puissance 3 connecté entre le générateur 2 et la batterie 1. Des circuits de mesures 4 et 5 permettant respectivement de mesurer la tension et le courant à la sortie du générateur 2 et aux bornes de la batterie 1 sont connectés à une unité de contrôle 6, également connectée au régulateur de puissance 3. Un circuit 7 de mesure de la température et un module 8 d'estimation de la ressource énergétique disponible au générateur 2 sont également connectés à l'unité de contrôle 6. Un élément de charge 9 est classiquement alimenté par la batterie 1.

Le circuit 7 de mesure de la température comporte au moins un capteur de mesure de la température ambiante et, de préférence, un capteur de mesure de la température des composants électroniques, ainsi qu'un capteur de mesure de la température de la batterie 1. Cependant, dans un autre mode de réalisation, des abaques peuvent être utilisés pour estimer la température des composants électroniques et/ou de la batterie 1 en fonction de la température ambiante et/ou d'un autre capteur de température plus représentatif et plus facile à mettre en oeuvre.

Le générateur 2 d'énergie est, par exemple, un panneau photovoltaïque ou un dispositif micro-hydraulique.

Le régulateur de puissance 3 comporte de préférence un convertisseur de type BUCK. Le régulateur 3 comporte avantageusement, également, un dispositif de recherche du point de puissance maximal (« MPPT, Maximum Power Point Tracking » en anglais) et un chargeur de batterie. L'unité de contrôle 6 est ainsi destinée à réguler la charge de la batterie 1, par l'intermédiaire du régulateur de puissance 3, et à gérer l'adéquation entre la puissance fournie par le générateur 2 et la charge de la batterie 1.

L'unité de contrôle 6 peut déterminer la puissance à la sortie du générateur 2, à partir des mesures de la tension et de l'intensité fournies par le circuit de mesure 4. De manière connue, l'unité de contrôle 6 peut déterminer l'état de charge de la batterie 1 en fonction de la température de la batterie 1 de la tension aux bornes de la batterie 1 (fournie par le circuit de mesure 5) et du courant délivré par cette batterie, par exemple au moyen d'abaques. Cette estimation de l'état de charge est avantageusement utilisée par l'unité de contrôle 6 pour définir, au moyen d'algorithmes de charge de type connu, les besoins en énergie de la batterie 1. L'estimation de l'état de charge peut être réalisée selon la méthode utilisée soit avant la charge de batterie 1 soit de façon périodique. Dans le cas où la détermination de l'état de charge est uniquement réalisée avant la charge, au sortir du mode de veille, l'unité de contrôle 6 calculera, en continu, la puissance fournie à la batterie 1 et la puissance délivrée par cette dernière.

Le module 8 d'estimation de la ressource énergétique disponible au générateur 2 en fonction du temps est de préférence intégré dans l'unité de contrôle 6 et comporte en mémoire des données relatives aux conditions d'approvisionnement du générateur 2 en ressources énergétiques, en fonction du temps. Les données sont, par exemple, lorsque le générateur 2 est constitué par des panneaux photovoltaïques, qui ne fournissent de l'énergie que pendant la journée, la durée théorique d'ensoleillement, l'heure de coucher du soleil, le temps restant jusqu'au coucher du soleil et l'évolution théorique de la température à la date considérée. Pour ce type d'application, le fonctionnement est prévu pour la journée à venir.

Dans le cas où le générateur 2 est de type micro-hydraulique, les données sont par exemple la durée pendant laquelle le débit hydraulique est supérieur à un seuil prédéterminé.

Le module 8 d'estimation de la ressource énergétique disponible permet, également, avantageusement, la mise en mémoire des conditions réelles relevées sur une durée, prédéterminée, immédiatement précédente, par exemple, sur les trois derniers jours pour une installation photovoltaïque. Les conditions relevées comportent alors, notamment, la puissance délivrée sur les journées précédentes, l'évolution réelle de la température mesurée et la durée effective de jour. Ces conditions réelles des journées précédentes peuvent alors être utilisées par l'unité de contrôle 6 pour pondérer les données théoriques associées à la date considérée et préalablement mise en mémoire.

L'unité de contrôle 6 est ainsi capable d'estimer en début de journée, puis tout au long de la journée, la puissance pouvant être fournie par le générateur 2 en fonction des conditions d'ensoleillement prévues et de l'évolution de la température sur la journée à venir.

De manière plus générale, pour un générateur 2 fournissant de l'énergie de manière intermittente et quasi-périodique, les conditions de fonctionnement sur un nombre prédéterminé de périodes immédiatement précédentes sont de préférence mises en mémoire dans le module 8.

L'unité de contrôle 6 régule la charge de la batterie 1 en tenant également compte des données représentatives de la fiabilité, par exemple, des composants électroniques et de la batterie 1, en fonction de la puissance et de la température. La figure 4 représente un ensemble de courbes illustrant la température θ en fonction de la puissance P pour diverses valeurs d'un critère de fiabilité de composants électroniques, plus particulièrement la durée entre deux pannes non destructrices. L'unité de contrôle 6 utilise ces données pour déterminer, notamment en fonction de l'évolution de la température pour la journée à venir et du critère de fiabilité retenue, la puissance maximale acceptable P_{MAX}, c'est-à-dire la puissance qu'il ne faut pas dépasser pour garantir le critère de fiabilité choisi par l'utilisateur, ainsi que son évolution sur la journée à venir. L'unité de contrôle 6 peut, avantageusement, prendre en compte également une densité de courant à ne pas dépasser. De même, l'unité de contrôle peut actualiser la puissance maximale acceptable P_{MAX} ainsi que son évolution sur la journée à venir en fonction de l'évolution réelle de température.

Un exemple particulier de fonctionnement d'un système isolé alimenté par un panneau photovoltaïque 2, dont l'autonomie est assurée par des batteries d'accumulateur 1, est décrit ci-dessous.

Lorsque la puissance fournie par le panneau photovoltaïque 2 dépasse un seuil minimum de puissance, l'unité de contrôle 6 déclenche une procédure de sortie de veille.

L'unité de contrôle 6 détermine une évolution de la puissance maximale acceptable P_{MAX}, pour la journée à venir, en fonction du critère de fiabilité, par exemple, la durée entre deux pannes non destructrices, préalablement défini par l'utilisateur, et de la prévision de l'évolution de température sur la journée à venir.

L'unité de contrôle 6 détermine ensuite, par exemple à partir de la mesure de la tension aux bornes de la batterie 1, de sa température, et au moyen d'abaques, l'état de charge SOC actuel de la batterie 1 et donc l'énergie nécessaire E pour effectuer la charge complète de la batterie 1.

La puissance maximale acceptable P_{MAX}, préalablement estimée, permet alors à l'unité de contrôle 6 de calculer l'énergie maximale E_{MAX}, également estimée, pouvant être délivrée à la batterie 1 dans les conditions climatiques prévues, sur l'ensemble de la durée d'ensoleillement.

L'unité de contrôle 6 détermine ensuite, en fonction de l'énergie nécessaire E et de la durée d'ensoleillement prévue, la puissance moyenne P_{M} théorique de charge. Cette puissance moyenne P_{M} théorique correspond à la puissance moyenne, constante, qui devrait être injectée dans la batterie 1 durant la durée théorique prévue d'ensoleillement, fournie par le module 8 d'estimation de la ressource énergétique disponible. La puissance moyenne P_{M} théorique est obtenue en faisant le rapport entre l'énergie nécessaire E et la durée théorique d'ensoleillement. L'unité de contrôle 6 peut ainsi étaler, sur la durée d'ensoleillement, l'énergie fournie à la batterie 1, pendant sa charge, de manière à éviter les pics de puissance, lorsque les conditions de fonctionnement laissent à prévoir une ressource disponible sur une période de temps suffisante.

L'unité de contrôle 6 compare alors, l'énergie nécessaire E pour charger la batterie 1 et l'énergie maximale E_{MAX} pour définir, ensuite, la valeur d'une puissance consigne de charge P_{L} qui représente la puissance maximale qui peut être délivrée aux bornes de la batterie 1 à un instant donné. La puissance consigne de charge P_{L} ne doit jamais être supérieure à la puissance maximale acceptable P_{MAX} afin de ne pas enfreindre la limitation imposée pour garantir le critère de fiabilité retenue.

Si l'énergie nécessaire E est inférieure à l'énergie maximale E_{MAX}, alors l'énergie maximale délivrable à la batterie 1 devrait être suffisante. L'unité de contrôle 6 contrôle alors le régulateur 3 de manière à ce que la puissance consigne de charge P_{L} soit constituée par la plus faible puissance parmi la puissance moyenne P_{M} et la puissance maximale acceptable P_{MAX}. Ainsi la puissance consigne P_{L} est égale à la puissance moyenne P_{M} tant que celle-ci est inférieure à la puissance maximale acceptable P_{MAX}. Dans le cas contraire, la puissance consigne P_{L} est égale à la puissance maximale acceptable P_{MAX}.

Si l'énergie nécessaire E est supérieure à l'énergie maximale E_{MAX}, sur la journée à venir, l'énergie maximale délivrable à la batterie 1 va être inférieure à ses besoins. L'unité de contrôle 6 contrôle alors le régulateur de puissance 3 de manière à ce que la puissance consigne de charge P_{L} soit égale à la puissance maximale acceptable P_{MAX}, quelle que soit la valeur de la puissance moyenne P_{M}, pour accumuler le maximum d'énergie, tout en respectant le critère de fiabilité défini par l'utilisateur.

Ainsi, la puissance consigne P_{L}, normalement égale à la puissance maximale acceptable P_{MAX}, passe à la valeur moyenne P_{M} lorsque E<E_{MAX} et P_{M}<P_{MAX}. Grâce à ce principe de fonctionnement, en début de journée, l'unité de contrôle 6 étale, sur la durée estimée de fonctionnement du générateur 2, l'énergie de charge des éléments de stockage 1. De cette manière, le système autonome évite, dans la mesure du possible, les fortes variations de courant et les variations de température qui en découlent, tout en garantissant la fiabilité des composants électroniques du système.

L'état de charge SOC de la batterie 1 et l'énergie restant à injecter sont déterminés périodiquement par l'unité de contrôle 6 soit directement à partir d'une mesure, soit en fonction d'une mesure en début de journée et ajustement par les puissances entrant et sortant de la batterie 1. Les informations relatives aux conditions de fonctionnement, comme la température extérieure, sont également enregistrées périodiquement. Ainsi, l'énergie nécessaire E et la puissance moyenne P_{M} théorique ainsi que la puissance maximale acceptable P_{MAX} et l'énergie maximale E_{MAX} sont recalculées et comparées, périodiquement, tout au long de la journée. La puissance moyenne P_{M} et la puissance maximale acceptable P_{MAX} évoluent tout au long de la journée et selon l'évolution de ces données au cours de la journée, la puissance consigne de charge P_{L} peut évoluer entre la puissance moyenne P_{M} et la puissance maximale acceptable P_{MAX}.

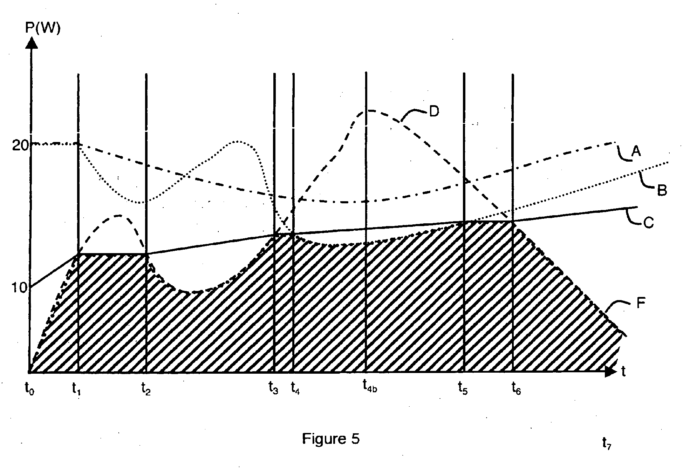

A titre d'exemple, le fonctionnement sur une journée d'un système autonome, comportant un panneau photovoltaïque 2 destiné à charger une batterie d'accumulateur 1, va être décrit ci-dessous en référence à la figure 5. Celle-ci représente les différentes puissances mesurées et estimées en fonction du temps.

En début de journée, à la sortie du mode de veille, à un instant t₀, l'unité de contrôle 6 a en mémoire la durée d'ensoleillement escomptée pour la journée à venir (par exemple 10 heures). L'unité de contrôle 6 détermine également, à partir de l'évolution de la température prévue sur la journée à venir et du critère de fiabilité, choisi par l'utilisateur, une évolution de la puissance maximale acceptable P_{MAX} (courbe A, avec P_{MAX} variant entre 20W et 14W à l'instant t₀), théorique. Ensuite, l'unité de contrôle 6, calcule, en fonction de l'évolution de la puissance maximale acceptable, l'énergie maximale E_{MAX} théorique (170 Wh dans l'exemple considéré). Cette énergie E_{MAX} peut être pondérée par l'évolution de la température enregistrée dans les jours précédents. L'unité de contrôle 6 détermine ensuite, l'énergie nécessaire E à injecter au sein de la batterie 1 pour réaliser sa charge (par exemple 100Wh). Puis elle calcule, à partir de ces deux données, la puissance moyenne P_{M} théorique (10W), pour une charge constante et étalée sur l'ensemble de la durée d'ensoleillement prévue.

Les énergies nécessaire E et maximale E_{MAX} sont alors comparées pour définir la valeur de la puissance consigne de charge P_{L} à utiliser. Dans l'exemple considéré, l'énergie E (100Wh) est inférieure à l'énergie maximale E_{MAX} (170Wh) et, à l'instant t₀, la puissance moyenne théorique P_{M}= 10W est inférieure à la puissance maximale acceptable P_{MAX}(20W). La puissance consigne de charge P_{L} est donc égale à la puissance moyenne P_{M}.

Sur la figure 5, les différentes courbes représentent respectivement :
- Courbe A : l'estimation en début de journée de la puissance maximale acceptable théorique (P_{MAX} théorique)
- Courbe B : l'évolution réelle de la puissance maximale acceptable (P_{MAX})
- Courbe C : l'évolution de la puissance moyenne P_{M} au cours de la journée
- Courbe D : l'évolution de la puissance maximale pouvant être délivrée par le générateur
- Courbe F : l'évolution de la puissance réelle de charge aux bornes de la batterie

En début de journée, entre t₀ et t₁, l'irradiation est faible et la puissance délivrée par le générateur 2 (courbe D) est inférieure à la puissance moyenne P_{M}, calculée par l'unité de contrôle 6 pour étaler la charge sur les dix prochaines heures. La puissance réelle de charge fournie à la batterie 1 (courbe F) est alors la puissance fournie par le générateur 2 (courbe D). L'unité de contrôle 6 recalcule alors périodiquement la valeur de la puissance moyenne P_{M}, pour tenir compte de la charge réellement effectuée. La valeur de la puissance moyenne P_{M} augmente, alors, pour compenser, sur le reste de la journée, le manque de puissance actuel, (courbe C). De manière analogue, l'unité de contrôle 6 réactualise en permanence la valeur réelle de la puissance maximale acceptable P_{MAX} (courbe B) en fonction de l'évolution réelle de la température.

L'irradiation augmente à partir de l'instant t₀ et la puissance délivrée par le générateur 2 (courbe D) devient égale à la puissance consigne de charge P_{L} à l'instant t₁. L'unité de contrôle 6 limite alors à la valeur P_{L}=P_{M} (11W dans l'exemple considéré) la puissance réelle de charge fournie à la batterie 1 par le régulateur 3 de puissance. Les courbes C et F sont alors confondues jusqu'à l'instant t₂, tant que la puissance délivrée par le générateur 2 (courbe D) est supérieure ou égale à la puissance moyenne P_{M} constituant la puissance consigne de charge P_{L}. Ainsi, l'unité de contrôle 6 limite la puissance de charge pendant un premier palier de charge à puissance constante entre les instants t₁ et t₂.

Après avoir atteint un pic entre t₁ et t₂, l'irradiation continue à diminuer, après t₂ et jusqu'à un instant t₃, la puissance fournie par le générateur 2 (courbe D) reste inférieure à la puissance consigne P_{L}. Le panneau photovoltaïque 2 n'est plus en mesure de fournir la puissance demandée. La puissance réelle de charge est alors égale à la puissance fournie par le générateur 2, c'est-à-dire que les courbes D et F sont confondues. Comme entre les instants t₀ et t₁, la puissance de charge réelle (courbe F) étant inférieure à la puissance moyenne P_{M} (courbe C) initialement calculée pour un étalement uniforme de la charge sur la durée prévue d'ensoleillement, la puissance moyenne P_{M} augmente entre t₂ et t₃ (courbe C), afin de compenser le manque d'énergie fournie à la batterie 1. Entre t₂ et t₃, les différentes grandeurs sont recalculées et comparées. Dans l'exemple considéré, avec les conditions climatiques réelles, l'énergie maximale E_{MAX} recalculée (110Wh) est toujours supérieure à l'énergie nécessaire E (80Wh) et la puissance moyenne P_{M} (courbe C) reste inférieure à la valeur correspondante de la puissance maximale de charge (courbe B) entre t₂ et t₃. La puissance consigne P_{L} reste alors confondue avec la puissance moyenne P_{M}.

L'irradiation et la température augmentent et la puissance délivrable (courbe D) par le générateur 2 devient égale à la puissance consigne P_{L} à partir de l'instant t₃. Comme entre t₁ et t₂, l'énergie nécessaire E est inférieure à l'énergie maximale E_{MAX} et la puissance moyenne (courbe C) est inférieure à la puissance maximale acceptable (courbe B), la puissance réelle de charge se confond, alors, entre t₃ et t₄, avec la puissance moyenne (courbe C et F confondues) pour un étalement uniforme de la charge sur la durée prévue d'ensoleillement.

A partir de l'instant t₄, la température ayant continué à augmenter, la puissance maximale acceptable P_{MAX} (courbe B) devient inférieure à la puissance moyenne P_{M} (courbe C). Dans ces conditions, la puissance consigne P_{L} est calée sur la valeur de la puissance maximale acceptable P_{MAX}. Les courbes B et F sont alors confondues. L'unité de contrôle 6, calculant un déficit d'énergie fournie à la batterie 1, augmente alors la valeur de la puissance moyenne P_{M} pour compenser le manque d'énergie sur le reste de la durée d'ensoleillement (courbe C).

Entre t₄ et t₅, l'unité de contrôle 6 recalcule l'énergie nécessaire E, l'énergie maximale E_{MAX}, les compare et détermine alors, à un instant t_{4b}, que l'énergie maximale est devenue inférieure à l'énergie nécessaire (E_{MAX} < E), dans l'exemple considéré. L'unité de contrôle 6 fixe alors la puissance consigne P_{L} à la puissance maximale acceptable P_{MAX}. La puissance de charge réelle (courbe F) reste ainsi confondue avec la puissance maximale acceptable P_{MAX} (courbe B)

A l'instant t₅, la température étant redescendue, la puissance moyenne P_{M} redevient inférieure à la puissance maximale acceptable P_{MAX}. L'unité de contrôle 6 fixe alors la puissance consigne P_{L} à la puissance moyenne P_{M}.

En fin de journée, à l'instant t₆, l'irradiation diminue et le panneau photovoltaïque 2 n'est plus en mesure de fournir la puissance P_{M}. La puissance de charge (courbe F) est alors égale à la puissance fournie par le générateur 2 (courbe D). L'unité de contrôle 6 augmente alors la valeur de la puissance moyenne P_{M} pour compenser le manque d'énergie sur le reste de la durée d'ensoleillement (courbe C).

Alors que dans le mode de réalisation, précédemment décrit, la puissance consigne P_{L} de charge est égale à la puissance moyenne P_{M} si et seulement si l'énergie nécessaire E est inférieure à l'énergie maximale et si la puissance moyenne P_{M} est inférieure à la puissance maximale P_{MAX} acceptable, la puissance consigne P_{L} étant égale à la puissance maximale dans les autres cas, une variante du mode de réalisation peut être utilisée afin d'augmenter la quantité d'énergie fournie à la batterie 1. Ainsi d'autres critères concernant la puissance consigne P_{L} sont utilisés. La puissance consigne P_{L} de charge est égale à la puissance moyenne P_{M} si et seulement si l'énergie nécessaire E est inférieure à l'énergie maximale E_{MAX} et si la puissance moyenne P_{M} est toujours inférieure au minimum de la puissance maximale P_{MAX} estimée sur la journée à venir. Dans le cas contraire, l'énergie nécessaire E étant supérieure à l'énergie maximale E_{MAX} ou le minimum de la puissance maximale P_{MAX} estimée sur la journée à venir étant inférieure à la puissance moyenne P_{M}, alors l'unité de contrôle 6 contrôle le régulateur 3 de manière à ce que la puissance consigne de charge P_{L} soit égale à la puissance maximale P_{MAX}.

Dans une autre variante du mode de réalisation, pouvant être combinée avec les modes de réalisations précédents, pour être plus sûr de charger la batterie 1, l'unité de contrôle 6 peut prendre en compte un facteur correctif lorsque la puissance consigne de charge P_{L} est normalement égale à la puissance moyenne P_{M}. Dans ces conditions, le facteur correctif peut être, par exemple, constant ou fonction de l'énergie restant à fournir à la batterie 1. Le facteur correctif sera déterminé préférentiellement de façon à ce que la puissance consigne de charge P_{L} soit comprise entre la puissance moyenne P_{M} et la puissance maximale P_{MAX} si la puissance moyenne P_{M} est inférieure à la puissance maximale P_{MAX}.

On peut également, si on le souhaite, introduire un facteur correctif sur la puissance maximale P_{MAX} (avantageusement inférieur à 1 pour éviter de charger directement à cette puissance maximale).

Une autre variante de réalisation peut être envisagée afin de mieux protéger la batterie. L'unité de contrôle 6 détermine un état de charge maximum SOCM acceptable par la batterie 1 en fonction de la température afin de ne plus réaliser, comme précédemment, la charge complète de la batterie 1 dans les gammes de température préjudiciables. A titre d'exemple, l'état de charge maximum SOCM acceptable pour la journée à venir est fonction du maximum de la température ambiante estimée pour la journée à venir. L'unité de contrôle 6 détermine ensuite, l'état de charge actuel SOC de la batterie 1 et donc l'énergie nécessaire E pour charger la batterie 1 jusqu'à l'état de charge maximum SOCM acceptable. L'état de charge maximum SOCM peut également être calculé en continu en fonction de l'évolution réelle de la température.

## Revendications

1. Procédé de charge, à partir d'un générateur (2), d'une batterie (1), d'un système autonome comportant des composants électroniques, avec une limitation, en fonction de la température, de la puissance fournie à la batterie (1) à une puissance consigne de charge (P_{L}), le procédé comportant
- une estimation de la durée pendant laquelle la ressource énergétique, disponible au générateur, est, jusqu'à un instant prédéterminé, supérieure à une valeur seuil prédéterminée,
- une estimation de l'évolution de la température jusqu'audit instant,
- l'estimation de l'évolution d'une puissance maximale acceptable (P_{MAX}) jusqu'audit instant, en fonction de l'évolution de la température et de données représentatives de la fiabilité du système en fonction de la température,
- la détermination de l'énergie nécessaire (E) pour charger la batterie (1),
- le calcul, en fonction de l'énergie nécessaire (E) et de ladite durée, d'une puissance moyenne (P_{M}) théorique, répartie sur ladite durée à venir, à délivrer à la batterie (1) pour le charger complètement,
- l'estimation à partir de la puissance maximale acceptable (P_{MAX}) d'une l'énergie maximale (E_{MAX}) pendant la durée à venir, pouvant être délivrée par le générateur,
- la détermination d'une puissance consigne de charge fonction de la comparaison entre l'énergie nécessaire (E) et l'énergie maximale (E_{MAX}) et de la comparaison entre la puissance moyenne (P_{M}) et la puissance maximale de charge (P_{MAX}).

2. Procédé selon la revendication 1, **caractérisé en ce que** la valeur de la puissance consigne de charge (P_{L}) est égale à la puissance moyenne (P_{M}) si l'énergie nécessaire (E) est inférieure ou égale à l'énergie maximale (E_{MAX}) et si la puissance moyenne (P_{M}) est inférieure à la puissance maximale acceptable (P_{MAX}), la valeur de la puissance consigne de charge (P_{L}) étant égale à la puissance maximale acceptable (P_{MAX}) dans les autres cas.

3. Procédé selon la revendication 1, **caractérisé en ce que** la valeur de la puissance consigne de charge (P_{L}) est égale à la puissance moyenne (P_{M}) si l'énergie nécessaire (E) est inférieure ou égale à l'énergie maximale (E_{MAX}) et si la puissance moyenne (P_{M}) est inférieure au minimum de la puissance maximale acceptable (P_{MAX}) estimé pour la durée à venir, la valeur de la puissance consigne de charge (P_{L}) étant égale à la puissance maximale acceptable (P_{MAX}) dans les autres cas

4. Procédé selon l'une quelconque des revendications 1 à 3, **caractérisé en ce qu'**il comporte la détermination d'un état de charge maximum (SOCM) acceptable de la batterie (1) fonction de la température, l'énergie nécessaire (E) étant l'énergie nécessaire pour charger la batterie (1) à l'état de charge maximum (SOCM).

5. Procédé selon l'une quelconque des revendications 1 à 3, **caractérisé en ce que** l'énergie nécessaire (E) est l'énergie nécessaire pour charger complètement la batterie (1).

6. Procédé selon l'une quelconque des revendications 1 à 5, **caractérisé en ce que** la mesure de la température comporte la mesure de la température ambiante.

7. Procédé selon l'une quelconque des revendications 1 à 6, **caractérisé en ce que** la mesure de la température comporte une mesure représentative de la température des composants électroniques.

8. Procédé selon l'une quelconque des revendications 1 à 7, **caractérisé en ce que** le générateur (2) étant de type photovoltaïque, la durée pendant laquelle la ressource énergétique est disponible représente la durée d'ensoleillement.

9. Procédé selon l'une quelconque des revendications 1 à 7, **caractérisé en ce que** le générateur (2) étant de type micro-hydraulique, ladite durée représente la durée pendant laquelle le débit hydraulique est supérieur à un seuil prédéterminé.

10. Procédé selon l'une quelconque des revendications 1 à 9, **caractérisé en ce que** la production d'énergie au moyen du générateur étant intermittente et quasi-périodique, le système autonome comporte l'enregistrement de ses conditions de fonctionnement sur un nombre prédéterminé de périodes.

11. Procédé selon la revendication 10, **caractérisé en ce que** l'énergie maximale (E_{MAX}) est déterminée en prenant en compte les conditions de fonctionnement sur un nombre prédéterminé de périodes immédiatement précédentes.

12. Procédé selon l'une des revendications 10 et 11, **caractérisé en ce que** les conditions de fonctionnement enregistrées comportent la température, la durée effective de fonctionnement du générateur (2) et/ou l'évolution de l'énergie nécessaire.

13. Procédé selon l'une quelconque des revendications 1 à 12, **caractérisé en ce que** les données représentatives de la fiabilité comportent au moins des données relative à la fiabilité des composants électronique et de la batterie (1).

## Patentansprüche

1. Verfahren zum Laden einer Batterie (1) eines elektronische Bauelemente umfassenden autonomen Systems mittels eines Generators (2), mit einer Begrenzung der an die Batterie (1) gelieferten Leistung, in Abhängigkeit von der Temperatur, auf eine Sollladeleistung (P_{L}), wobei das Verfahren umfasst:
- eine Schätzung der Zeitdauer, während der die am Generator verfügbare Energieressource bis zu einem vorbestimmten Zeitpunkt größer als ein vorbestimmter Schwellwert ist,
- eine Schätzung der Entwicklung der Temperatur bis zu dem Zeitpunkt,
- die Schätzung der Entwicklung einer zulässigen Maximalleistung (P_{MAX}) bis zu dem Zeitpunkt, in Abhängigkeit von der Entwicklung der Temperatur und von Daten, die für die Zuverlässigkeit des Systems in Abhängigkeit von der Temperatur repräsentativ sind,
- die Bestimmung der erforderlichen Energie (E) zum Laden der Batterie (1),
- die Berechnung -in Abhängigkeit von der erforderlichen Energie (E) und der Zeitdauer- einer theoretischen Durchschnittsleistung (P_{M}), verteilt auf die kommende Zeitdauer, die an die Batterie (1) zu liefern ist, um sie vollständig aufzuladen,
- die Schätzung -anhand der zulässigen Maximalleistung (P_{MAX})- einer maximalen Energie (E_{MAX}) während der kommenden Zeitdauer, die durch den Generator geliefert werden kann,
- die Bestimmung einer Sollladeleistung, welche von dem Vergleich zwischen erforderlicher Energie (E) und maximaler Energie (E_{MAX}) und von dem Vergleich zwischen Durchschnittsleistung (P_{M}) und maximaler Ladeleistung (P_{MAX}) abhängig ist.

2. Verfahren nach Anspruch 1, **dadurch gekennzeichnet, dass** der Wert der Sollladeleistung (P_{L}) gleich der Durchschnittsleistung (P_{M}) ist, wenn die erforderliche Energie (E) kleiner als die oder gleich der maximalen Energie (E_{MAX}) ist und wenn die Durchschnittsleistung (P_{M}) kleiner als die zulässige Maximalleistung (P_{MAX}) ist, wobei der Wert der Sollladeleistung (P_{L}) in den anderen Fälle gleich der zulässigen Maximalleistung (P_{MAX}) ist.

3. Verfahren nach Anspruch 1, **dadurch gekennzeichnet, dass** der Wert der Sollladeleistung (P_{L}) gleich der Durchschnittsleistung (P_{M}) ist, wenn die erforderliche Energie (E) kleiner als die oder gleich der maximalen Energie (E_{MAX}) ist und wenn die Durchschnittsleistung (P_{M}) kleiner als das für die kommende Zeitdauer geschätzte Minimum der zulässigen Maximalleistung (P_{MAX}) ist, wobei der Wert der Sollladeleistung (P_{L}) in den anderen Fällen gleich der zulässigen Maximalleistung (P_{MAX}) ist.

4. Verfahren nach einem der Ansprüche 1 bis 3, **dadurch gekennzeichnet, dass** es die Bestimmung eines temperaturabhängigen zulässigen Maximalladezustandes (SOCM) der Batterie (1) umfasst, wobei die erforderliche Energie (E) die Energie ist, welche erforderlich ist, um die Batterie (1) auf den Maximalladezustand (SOCM) aufzuladen.

5. Verfahren nach einem der Ansprüche 1 bis 3, **dadurch gekennzeichnet, dass** die erforderliche Energie (E) die Energie ist, welche erforderlich ist, um die Batterie (1) vollständig aufzuladen.

6. Verfahren nach einem der Ansprüche 1 bis 5, **dadurch gekennzeichnet, dass** die Messung der Temperatur die Messung der Umgebungstemperatur umfasst.

7. Verfahren nach einem der Ansprüche 1 bis 6, **dadurch gekennzeichnet, dass** die Messung der Temperatur eine Messung, die für die Temperatur der elektronischen Bauelemente repräsentativ ist, umfasst.

8. Verfahren nach einem der Ansprüche 1 bis 7, **dadurch gekennzeichnet, dass**, wenn der Generator (2) vom photovoltaischen Typ ist, die Zeitdauer, während der die Energieressource verfügbar ist, die Sonneneinstrahlungsdauer darstellt.

9. Verfahren nach einem der Ansprüche 1 bis 7, **dadurch gekennzeichnet, dass**, wenn der Generator (2) vom mikrohydraulischen Typ ist, die Zeitdauer die Dauer darstellt, während der der hydraulische Durchsatz oberhalb einer vorbestimmten Schwelle liegt.

10. Verfahren nach einem der Ansprüche 1 bis 9, **dadurch gekennzeichnet, dass**, wenn die Energieerzeugung mittels des Generators intermittierend und quasiperiodisch ist, das autonome System die Aufzeichnung seiner Betriebsbedingungen über eine vorbestimmte Anzahl von Perioden umfasst.

11. Verfahren nach Anspruch 10, **dadurch gekennzeichnet, dass** die Maximalenergie (E_{MAX}) unter Berücksichtigung der Betriebsbedingungen über eine vorbestimmte Anzahl von unmittelbar vorhergehenden Perioden bestimmt wird.

12. Verfahren nach einem der Ansprüche 10 und 11, **dadurch gekennzeichnet, dass** die aufgezeichneten Betriebsbedingungen die Temperatur die tatsächliche Betriebsdauer des Generators (2) und/oder die Entwicklung der erforderlichen Energie umfassen.

13. Verfahren nach einem der Ansprüche 1 bis 12, **dadurch gekennzeichnet, dass** die für die Zuverlässigkeit repräsentativen Daten wenigstens Daten bezüglich der Zuverlässigkeit der elektronischen Bauelemente und der Batterie (1) umfassen.

## Claims

1. A method for charging from a generator (2), a battery (1) of an autonomous system comprising electronic components, with limiting, according to the temperature, of the power supplied to the battery (1) to a charging setpoint power (P_{L}), the method comprising
- an estimation of the time period during which the power resource available to the generator is, up to a preset moment, greater than a preset threshold value,
- an estimation of the temperature progression up to said moment,
- estimation of the progression of a maximum acceptable power (P_{MAX}) up to said moment, according to the temperature progression and to data representative of the reliability of the system according to the temperature,
- determination of the energy required (E) to charge the storage element (1),
- calculation, according to the energy required (E) and to said time period, of a theoretical mean power (P_{M}), spread over said time period to come, to be delivered to the storage element (1) to charge the latter completely,
- estimation from the maximum acceptable power (P_{MAX}) of a maximum energy (E_{MAX}) during the time period to come able to be delivered by the generator,
- determination of a charging setpoint power according to the comparison between the required energy (E) and the maximum energy (E_{MAX}) and to the comparison between the mean power (P_{M}) and the maximum charging power (P_{MAX}).

2. The method according to claim 1, **characterized in that** the value of the charging setpoint power (P_{L}) is equal to the mean power (P_{M}) if the required energy (E) is less than or equal to the maximum energy (E_{MAX}) and if the mean power (P_{M}) is less than the maximum acceptable power (P_{MAX}), the value of the charging setpoint power (P_{L}) being equal to the maximum acceptable power (P_{MAX}) in the other cases.

3. The method according to claim 1, **characterized in that** the value of the charging setpoint power (P_{L}) is equal to the mean power (P_{M}) if the required energy (E) is less than or equal to the maximum energy (E_{MAX}) and if the mean power (P_{M}) is less than the minimum of the maximum acceptable power (P_{MAX}) estimated for the forthcoming period, the value of the charging setpoint power (P_{L}) being equal to the maximum acceptable power (P_{MAX}) in the other cases.

4. The method according to any one of claims 1 to 3, **characterized in that** it comprises determination of a maximum acceptable state of charge (SOCM) of the battery (1) according to the temperature, the required energy (E) being the power required to charge the battery (1) to the maximum state of charge (SOCM).

5. The method according to any one of claims 1 to 3, **characterized in that** the required energy (E) is the power required to charge the battery (1) completely.

6. The method according to any one of claims 1 to 5, **characterized in that** temperature measurement comprises measurement of the ambient temperature.

7. The method according to any one of claims 1 to 6, **characterized in that** temperature measurement comprises a measurement representative of the temperature of the electronic components.

8. The method according to any one of claims 1 to 7, **characterized in that** the generator (2) being a photovoltaic generator, the period during which the power resource is available represents the period of sunlight.

9. The method according to any one of claims 1 to 7, **characterized in that** the generator (2) being a micro-hydraulic generator, said period represents the time during which the hydraulic flowrate is greater than a preset threshold.

10. The method according to any one of claims 1 to 9, **characterized in that** power production by means of the generator being intermittent and quasiperiodic, the autonomous system comprises recording of its operating conditions over a predetermined number of periods.

11. The method according to claim 10, **characterized in that** the maximum energy (E_{MAX}) is determined taking the operating conditions over a predetermined number of immediately preceding periods into account.

12. The method according to one of claims 10 and 11. **characterized in that** the recorded operating conditions comprise the temperature, the effective operating time of the generator (2) and/or the progression of the required power.

13. The method according to any one of claims 1 to 12, **characterized in that** the data representative of reliability comprises at least data relating to reliability of the electronic components and of the battery (1).
